# EUROPÄISCHE PATENTANMELDUNG

(11) **EP 3 023 583 A1**
(43) Veröffentlichungstag der Anmeldung: **25.05.2016**
(21) Anmeldenummer: 14193992.6
(22) Anmeldetag: 20.11.2014
(51) Int. Cl.: F01D 5/08, F01D 11/00, F01D 11/04

(54) **GASTURBINE MIT EINER KÜHLUNG DER LETZTEN TURBINENSTUFE**

(71) Anmelder: Siemens Aktiengesellschaft, 80333 München (DE)
(72) Erfinder: Wagner, Michael, 46539 Dinslaken (DE)

(57) **Zusammenfassung**

Eine Abgasstrecke (12) für eine Gasturbine (1), umfassend eine umschließende Verkleidung (42, 44) mit einer ersten Öffnung (48), die in einem Bereich der Abgasstrecke (12) angeordnet ist, der in einem Betriebszustand der Gasturbine (1) einen geringeren Druck als den Luftdruck der Außenumgebung der Gasturbine (1) aufweist, und die den Austritt eines Luftkanals (50) bildet, dessen Eintritt mit der Außenumgebung der Gasturbine (1) verbunden ist, soll einen besonders flexiblen Betrieb der Gasturbine durch sichere Vermeidung von Abgasleckagen in allen Betriebszuständen sicherstellen. Dazu bildet der Luftkanal (50) an seinem austrittsseitigen Ende eine Kammer (62), die eine zweite Öffnung (64) aufweist, durch die die Kammer (62) mit einem vorgegebenen Gasmassenstrom beaufschlagt wird.

## Beschreibung

Die Erfindung betrifft eine Gasturbine mit einem Stator, der eine Abgasstrecke umfasst, deren Innenverkleidung von den Plattformen der Laufschaufeln des Schaufelrads der heißgasseitig letzten Turbinenstufe des Rotors der Gasturbine durch einen axialen Spalt beabstandet ist, wobei der Spalt die Abgasstrecke mit einem Radseitenraum des Schaufelrads verbindet, der in einem Betriebszustand der Gasturbine einen geringeren Druck als den Luftdruck der Außenumgebung der Gasturbine aufweist, und der einen Lufteintritt aufweist, der über einen Luftkanal mit der Außenumgebung der Gasturbine verbunden ist.

Eine Gasturbine ist eine Strömungsmaschine, in der ein unter Druck stehendes Gas expandiert. Sie besteht aus einer Turbine oder Expander, einem vorgeschalteten Verdichter und einer zwischengeschalteten Brennkammer. Das Wirkungsprinzip beruht auf dem Kreisprozess (Joule-Prozess): Dieser komprimiert über die Beschaufelung einer oder mehrerer Verdichterstufen Luft, mischt diese anschließend in der Brennkammer mit einem gasförmigen oder flüssigen Treibstoff, zündet und verbrennt.

So entsteht ein Heißgas (Mischung aus Verbrennungsgas und Luft), das im nachfolgenden Turbinenteil entspannt, wobei sich thermische in mechanische Energie umwandelt und zunächst den Verdichter antreibt. Der verbleibende Anteil wird beim Wellentriebwerk zum Antrieb eines Generators, eines Propellers oder anderen rotierenden Verbrauchern verwendet. Das entspannte Heißgas wird in eine Abgasstrecke geführt, die zu diesem Zweck mit einer hitzebeständigen Verkleidung umschlossen ist, die die Begrenzung zum Heißgaskanal der Abgasstrecke bildet. Die Innenverkleidung der Abgasstrecke grenzt diese dabei zu den innenliegenden, um die Achse angeordneten Teilen des Stators ab.

Aufgrund konstruktiver Einschränkungen kann eine Gasturbinenabgasstrecke nur unzureichend zur Umgebung abgedichtet werden. So ist aufgrund der Wärmeausdehnung im Betrieb an der heißgasseitig letzten Turbinenstufe des Rotors ein axialer Spalt zwischen den Plattformen der Laufschaufeln und der Innenverkleidung der Abgasstrecke vorhanden, der die Abgasstrecke mit einem Radseitenraum, d. h. einem dem Schaufelrad benachbarten Raum verbindet. Da die Abgasstrecke unter ungünstigen Betriebszuständen bzw. Hardwarekonfigurationen einen Überdruck zur Umgebung aufweisen kann, ist eine Leckage von heißen Abgasen in die Umgebung bzw. in die Gasturbineneinhausung nicht auszuschließen. Dieses verursacht eine erhöhte Temperaturbelastung an den Bauteilen der Gasturbine und Emissionen schädlicher Abgase. Zweitgenanntes stellt ein Sicherheitsrisiko dar.

Die oben genannten ungünstigen Betriebszustände sind kleine Heißgasmassenströme, d. h. niedrige Leistung der Gasturbine, welche aufgrund zunehmender Flexibilisierung immer wichtiger werden. Weiterhin können durch aerodynamische Änderungen an der letzten Turbinenstufe oder erhöhte Abgasdruckverluste im Kessel höhere Abgasdrücke auftreten.

In einigen Gasturbinentypen wird ein in Bereichen der Abgasstrecke entstehender Unterdruck genutzt, um über einen Lufteintritt im Radseitenraum und einen damit verbundenen Luftkanal Luft aus der Umgebung anzusaugen und diese zur Kühlung zu verwenden. Insbesondere hier, direkt im Anschluss an die in Strömungsrichtung des Heißgases letzte Laufschaufelreihe des Turbinenteils der Gasturbine treten im Normalbetrieb Drücke auf, die unter dem Umgebungsdruck der Luft in der Umgebung der Gasturbine liegen. Hier können also entsprechende Öffnungen angebracht werden, die über Kühlkanäle Luft aus der Umgebung ansaugen, so dass diese Luft zur Kühlung dieses Bereiches, insbesondere auch des in der Nähe befindlichen Radseitenraums, der mit dem Lagerraum des hinteren Turbinenlagers kommuniziert, genutzt werden kann. Dieses Prinzip ist beispielsweise in der WO 2012/141858 A1 beschrieben. Wie oben beschrieben tritt jedoch bei kleiner werdender Maschinenleistung das Problem auf, dass der der Abgasdruck steigt, der Unterdruck also sinkt. Sollte der Abgasdruck den Umgebungsdruck übersteigen, tritt eine Strömungsumkehr im Luftkanal und damit eine erhebliche Abgasleckage über diese Öffnung auf. Dieses ist in jedem Fall zu vermeiden, da aufgrund der vorgesehenen Luftkanäle sehr große Abgasleckagemengen auftreten können. Gegenwärtig gibt es keine Maßnahmen, die eine Abgasleckage hier verhindern könnten. Effektiv schränkt dies die Flexibilität der Gasturbine insbesondere im Bereich kleiner Lasten ein, da eine zu große Abgasleckage sicher vermieden werden muss.

Es ist daher Aufgabe der Erfindung, eine Gasturbine der eingangs genannten Art anzugeben, die einen besonders flexiblen Betrieb der Gasturbine durch sichere Vermeidung von Abgasleckagen in allen Betriebszuständen sicherstellt.

Diese Aufgabe wird erfindungsgemäß dadurch gelöst, dass der Lufteintritt mit dem Luftkanal über eine Kammer verbunden ist, die eine Öffnung aufweist, durch die die Kammer mit einem vorgegebenen Gasmassenstrom beaufschlagt wird.

Die Erfindung geht dabei von der Überlegung aus, dass kleine Abgasleckagemengen im Teillastbetrieb über Dichtungen oder Haken akzeptiert oder über neue Dichtungskonzepte kompensiert werden können. Ein Überdruck und damit eine Strömungsumkehr an Stellen, die auf das Ansaugen von Umgebungsluft über Luftkanäle ausgelegt sind, insbesondere im Radseitenraum in der heißgasseitig letzten Turbinenstufe, ist nicht akzeptabel, da in diesem Fall selbst bei kleinem Überdrücken deutliche Abgasleckagemengen auftreten werden. Daher sollte, um auch einen Betrieb in niedriger Teillast zu ermöglichen, eine konstruktive Lösung geschaffen werden, die dafür sorgt, dass auch bei einer Umkehr der Druckverhältnisse derart, dass am Austritt des Luftkanals im Abgaskanal ein höherer Druck herrscht als in der Umgebung der Gasturbine, ein Rückstrom von Abgas sicher vermieden wird. Dies ist erreichbar, indem der Luftkanal nicht mehr direkt mit dem betreffenden Radseitenraum verbunden ist, sondern eine zusätzliche Kammer zwischengeschaltet wird. Das bedeutet, dass der Luftkanal zunächst in diese Kammer mündet. Aus der Kammer besteht eine Verbindung zum Radseitenraum. Die Kammer weist eine zusätzliche Öffnung auf, durch die die Kammer mit einem vorgegebenen Gasmassenstrom beaufschlagt wird. Mit anderen Worten: Die Kammer weist mindestens drei Öffnungen auf, nämlich eine Verbindung zum Radseitenraum, eine Verbindung zum Luftkanal zur Umgebung und die Öffnung für den besagten vorgegebenen Gasmassenstrom. Dieser Gasmassenstrom besteht aus einem ungefährlichen Gas, z. B. Luft und spült die Kammer vollständig. Hierdurch wird erreicht, dass im Falle einer Druckumkehr der Rückmassenstrom durch den Luftkanal aus dem Gasmassenstrom gespeist wird und nicht aus dem Abgas. Dadurch kann kein Abgas austreten. Im Normalbetrieb addiert sich der Gasmassenstrom lediglich zu dem von außen angesaugten Luftstrom.

Die Kammer grenzt dabei vorteilhafterweise direkt an den Radseitenraum an. Die Verbindung von Radseitenraum zur Kammer wird dabei in konstruktiv besonders einfacher Weise durch eine Öffnung in der Trennwand zwischen Radseitenraum und Kammer realisiert.

Die als Pufferkammer fungierende Kammer im Austrittsbereich des Luftkanals ist vorteilhafterweise derart ausgeführt, dass der Druck in der Kammer weniger als 30 mbar, vorzugsweise weniger als 10 mbar oberhalb des Druckes im Radseitenraum liegt. Allgemein sollte der Druck in der Kammer nur unwesentlich oberhalb des Abgasdrucks liegen, der dem Druck im Radseitenraum entspricht, d. h. die Kammer sollte durch den konstanten Gasmassenstrom nicht aufgeladen werden. Dadurch wird erreicht, dass die Kammer die gewollte Ansaugung von Außenluft in den Radseitenraum nicht verhindert. Hierzu sollte insbesondere die Öffnung zwischen Kammer und Radseitenraum groß genug ausgeführt werden, damit der Gasmassenstrom kontinuierlich im Normalbetrieb in den Radseitenraum strömen kann.

In vorteilhafter Ausgestaltung weist der Radseitenraum eine weitere Öffnung auf, durch die Spülluft zugeführt wird. Hierdurch wird der Radseitenraum neben der von außen angesaugten Umgebungsluft auch durch Spülluft z. B. aus Verdichterentnahmen oder einem externen Gebläse gekühlt, was die Kühlung weiter verbessert.

In weiterer vorteilhafter Ausgestaltung ist die Quelle des Gasmassenstroms, mit dem die Kammer gespült wird, für einen im Wesentlichen konstanten Massenstrom bei sich änderndem Druck im Radseitenraum ausgelegt. Hierdurch wird gewährleistet, dass unabhängig vom Druck, der in dem Bereich des Spalts der Verkleidung im Inneren der Abgasstrecke und damit auch im Radseitenraum herrscht, und damit insbesondere bei höheren Drücken in diesem Bereich, stets eine ausreichende, komplette Spülung der Kammer mit dem Gasmassenstrom vorliegt. Dies kann insbesondere dadurch realisiert sein, dass die Quelle des Gasmassenstroms auf einem ausreichend hohen Druckniveau liegt, so dass die im Betrieb zu erwartenden Druckschwankungen im Inneren der Abgasstrecke keinen Einfluss auf den Massenstrom haben. Hierdurch kann gewährleistet werden, dass bei einer Strömungsumkehr im Luftkanal stets ein ausreichender Massenstrom in die Kammer vorliegt, aus dem der Rückfluss in die Umgebung gespeist werden kann.

In einer ersten vorteilhaften Ausgestaltung ist der Öffnung der Kammer, durch die der Gasmassenstrom eingeführt wird, ein Gebläse vorgeschaltet. Mittels eines eigens für den Gasmassenstrom zur Spülung der Kammer vorgesehenen Gebläses, was dementsprechend ausgelegt und gesteuert werden kann, kann der ausreichende Gasmassenstrom in besonders einfacher Weise geregelt werden. Hier wäre es auch denkbar, das Gebläse nur während der kritischen Betriebszustände, bei denen die Gefahr einer Strömungsumkehr besteht, zu betreiben.

In einer zweiten, alternativen oder zusätzlichen vorteilhaften Ausgestaltung ist der Öffnung der Kammer, durch die der Gasmassenstrom eingeführt wird, eine Verdichterentnahmeeinrichtung vorgeschaltet. Mit anderen Worten: Der Gasmassenstrom wird durch Anzapfluft aus dem Verdichter gespeist. Da ohnehin in einer Gasturbine zu verschiedenen Zwecken Luft aus dem Verdichter auf unterschiedlichsten Druckniveaus verwendet wird, kann ein entsprechendes Entnahmesystem auch erweitert werden, um die Kammer mit dem benötigten Gasmassenstrom zu speisen.

Weiterhin kann in vorteilhafter Ausgestaltung der Öffnung der Kammer, durch die der Gasmassenstrom eingeführt wird, eine Sperrluftdichtung der Welle der Gasturbine zugeordnet sein. Hierunter wird verstanden, dass die Öffnung und damit die Kammer druckluftversorgungsseitig mit einer Sperrluftdichtung parallel geschaltet sind oder durch diese mit Druckluft versorgt werden. Hierdurch kann in besonders einfacher Weise eine Beaufschlagung der Kammer mit einem Gasmassenstrom erreicht werden: Die Abgasstrecke umschließt das Wellenlager der Gasturbine im turbinenseitigen Teil. Dieses ist zur Kompensation von thermischer Ausdehnung axial verschiebbar ausgelegt und daher mit einer mit einer mit Sperrluft beaufschlagten Labyrinthdichtung versehen. Durch einfache Bohrungen in den Bereich dieser Sperrluftdichtung kann die dort vorhandene Sperrluft, die einen Druck von einigen bar aufweisen kann, abgezapft und zur Beaufschlagung der Kammer verwendet werden. Alternativ können Sperrluftdichtung und Kammer aus derselben Druckluftquelle versorgt werden (Parallelschaltung). Diese Lösung ist mit besonders geringem baulichen Aufwand realisierbar.

In vorteilhafter Ausgestaltung der Gasturbine ist die Kammer weiterhin um die Achse der Gasturbine umlaufend ausgebildet. Hierdurch ist in jedem Umfangsbereich eine zuverlässige Vermeidung von Heißgasrückstrom in den Luftkanal oder die mehreren, entlang des Umfangs verteilten Luftkanäle gesichert.

Eine Kraftwerksanlage umfasst vorteilhafterweise eine derartige Gasturbine.

Die mit der Erfindung erzielten Vorteile bestehen insbesondere darin, dass durch die Einbringung einer mit einem festen Gasmassenstrom gespülten Kammer am Austritt eines im Normalfall zur Ansaugung von Umgebungsluft mittels Unterdruck bestimmten Luftkanals ein Rückfluss von schädlichem Abgas im Falle einer Strömungsumkehr aufgrund eines Anstiegs des Drucks sicher verhindert werden kann. Stattdessen wird der umgekehrte Massenstrom vollständig durch den in die Kammer eingebrachten Gasmassenstrom gespeist. Damit ergeben sich Vorteile bzgl. der Integrität der Bauteile und der erhöhten Sicherheit gegen Abgasemissionen in die Einhausung der Gasturbine. Ohne diese Maßnahme müsste man auf die Bohrungen komplett verzichten, was erhebliche Nachteile bzgl. der Gasturbinen-Wärmeabgabe im Grundlastbetrieb hätte.

Ein Ausführungsbeispiel der Erfindung wird anhand einer Zeichnung näher erläutert. Darin zeigen:
- FIG 1: eine schematische Darstellung einer Gasturbine in einer Kraftwerksanlage,
- FIG 2: einen Längsschnitt der oberen Hälfte der letzten Turbinenstufe und der Abgasstrecke der Gasturbine, und
- FIG 3: einen Längsschnitt durch eine Pufferkammer am Eintritt eines Luftkanals zur Ansaugung von Umgebungsluft.

Gleiche Teile sind in allen Figuren mit denselben Bezugszeichen versehen.

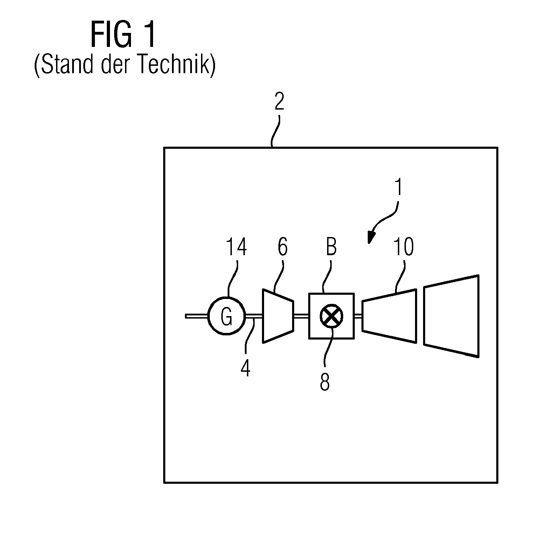

Die FIG 1 zeigt schematisch eine Gasturbine 1 in einer Kraftwerksanlage 2. Die Gasturbine 1 weist im Inneren einen um eine Welle 4 (Axialrichtung) drehgelagerten Rotor auf, der auch als Turbinenläufer bezeichnet wird und der vom stationären Teil der Gasturbine 1, dem Stator umschlossen wird. In Strömungsrichtung des die Gasturbine 1 durchströmenden Mediums folgt entlang der Welle 4 zunächst ein Verdichter 6. Aus dem Austritt des Verdichters 6 wird die Luft in eine Brennkammer 8 geführt, die mit Brennstoff B versorgt wird. Auf die Brennkammer 8 folgen eine Turbine 10 und die Abgasstrecke 12. Verdichterseitig ist auf der Welle 4 der Gasturbine 1 ein Generator 14 angeordnet.

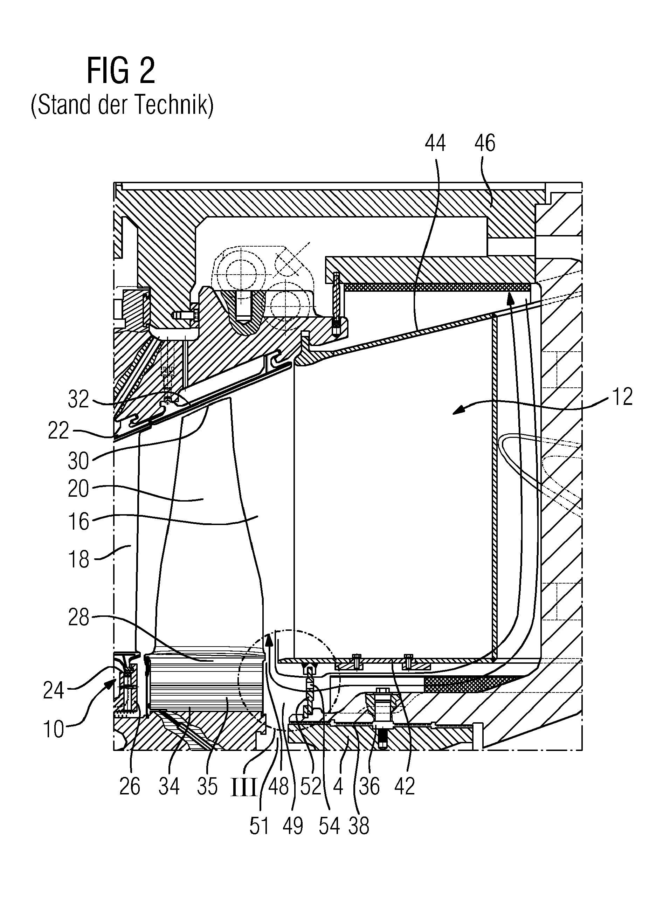

FIG 2 zeigt im Detail in einem Längsteilschnitt den strömungsseitig letzten Teil der Turbine 10 der Gasturbine 1 sowie den daran anschließenden Teil der Abgasstrecke 12. Der Teilschnitt zeigt nur die obere Hälfte der Gasturbine 1, wie sie aus dem Stand der Technik bekannt ist.

Der im Querschnitt ringförmige Heißgaskanal 16 wird vor der Turbine 12 aus der Brennkammer 8 mit Heißgas bespeist. Die Turbine 12 umfasst mehrere hintereinander geschaltete Turbinenstufen, wobei in der FIG 2 nur die heißgasseitig letzte Turbinenstufe dargestellt ist, d. h. die Turbinenstufe, durch die das Heißgas direkt vor dem Strömen in die Abgasstrecke 12 als Letztes hindurchtritt. Jede Turbinenstufe ist aus zwei Schaufelringen gebildet. In Strömungsrichtung des Heißgases gesehen folgt im Heißgaskanal 16 einer aus Leitschaufeln 18 gebildete Leitschaufelreihe eine aus Laufschaufeln 20 gebildete Laufschaufelreihe. Die Leitschaufeln 18 und die Laufschaufeln 20 sind leicht gekrümmt profiliert, ähnlich einer Flugzeugtragfläche.

Die Leitschaufeln 18 sind dabei am Stator befestigt. Jede Leitschaufel 18 weist neben dem eigentlichen Schaufelblatt einen auch als Plattform 22 bezeichneten Leitschaufelfuß und einen der Plattform 22 gegenüberliegenden Leitschaufelkopf 24 auf. Der Leitschaufelkopf 24 ist der Welle 4 zugewandt und an einem Innenring 26 festgelegt. Jeder Innenring 26 umschließt dabei die Welle 4 des Rotors.

Ebenso weist jede Laufschaufel 20 einen derartigen als Plattform 28 bezeichneten Laufschaufelfuß auf, endet jedoch in einer Laufschaufelspitze 30. Der Laufschaufelspitze 30 im Heißgaskanal 16 gegenüberliegend ist eine ringförmige Auskleidung 32 angeordnet. Die Auskleidung 32 bildet somit zusammen mit den Plattformen 22, 28 und den Leitschaufelköpfen 24 die Begrenzung des Heißgaskanals 16.

Die Laufschaufeln 20 einer Laufschaufelreihe sind mittels jeweils einer Turbinenscheibe 34 an der Welle 4 angebracht. Laufschaufeln 20 und Turbinenscheibe 34 bilden somit ein Schaufelrad 35. Die Laufschaufeln 20 bilden somit Bestandteile des rotierenden Teils der Gasturbine 1, nämlich des Rotors oder Läufers. Ein analoger Aufbau mit Schaufelreihen aus Leit- und Laufschaufeln 18, 20 findet sich ebenso im Verdichter 6.

FIG 2 zeigt weiterhin die turbinenseitige Abdichtung der Lagerung der Welle 4 der Gasturbine 1. Die zylindermantelförmige Grenzfläche zwischen Welle 4 und Stator ist dabei als Sperrluftdichtung 36 ausgebildet. Die Sperrluftdichtung 36 umfasst ein Dichtlabyrinth 38, welches sich über die gesamte Grenzfläche erstreckt und eine außerhalb des Ausschnittes der FIG 2 liegende Sperrlufteinführeinrichtung. Diese wird von einer Verdichterentnahmeeinrichtung mit Luft mit hohem Druck versorgt. Derartige Verdichterentnahmeeinrichtungen können an verschiedenen Stellen im Verdichter 6 vorgesehen sein, so dass Luft verschiedener Druckniveaus entnommen und in der Gasturbine 1 bereitgestellt werden kann, beispielsweise für Sperrluftdichtungen, aber auch als Kühlluft für z. B. eine Filmkühlung von Bauteilen der Turbine 10.

Durch die Sperrluftdichtung 36 wird eine Abdichtung des Wellenlagers erreicht, wobei gleichzeitig eine axiale Verlagerung der Welle 4, z. B. zum Ausgleich von thermischer Ausdehnung der Rotorbauteile möglich bleibt.

Während des Betriebes der Gasturbine 1 wird vom Verdichter 6 durch ein nicht näher dargestelltes Ansauggehäuse Luft angesaugt und verdichtet. Die am turbinenseitigen Ende des Verdichters 6 bereitgestellte verdichtete Luft wird in die Brennkammer 8 geführt und dort mit einem Brennstoff B vermischt. Das Gemisch wird dann unter Bildung eines Heißgases in der Brennkammer 8 verbrannt. Von dort aus strömt das Heißgas entlang des Heißgaskanals 16 vorbei an den Leitschaufeln 18 und den Laufschaufeln 20.

Dem Fluidstrom wird durch die möglichst wirbelfreie laminare Umströmung der Schaufeln 18, 20 ein Teil seiner inneren Energie entzogen, der auf die Laufschaufeln 20 der Turbine 10 übergeht. Über diese wird dann der Rotor in Drehung versetzt, wodurch zunächst der Verdichter 6 angetrieben wird. Die nutzbare Leistung wird an den Generator 14 abgegeben.

FIG 2 zeigt weiterhin, dass der Heißgaskanal 16 im Anschluss an die letzte Laufschaufelreihe in die Abgasstrecke 12 übergeht. Die Abgasstrecke 12 weist demnach ebenfalls einen dem Heißgaskanal 16 entsprechenden ringförmigen Querschnitt auf, der sich jedoch entlang der Welle erweitert. Die Abgasstrecke 12 umfasst hier eine zylinderförmige Innenverkleidung 42, die die Welle 4 umschließt, sowie eine konische Außenverkleidung 44, die am Gehäuse 46 der Gasturbine 1 befestigt ist. Die Außenverkleidung 44 schließt nahtlos an die der letzten Laufschaufelreihe gegenüberliegende Auskleidung 32 an, während die Innenverkleidung 42 auf gleichem radialem Abstand von der Achse der Gasturbine 1 an die Plattformen 28 der letzten Laufschaufelreihe anschließt. Allerdings ist die Innenverkleidung 42 dabei in axialer Richtung von den Plattformen 28 der letzten Laufschaufelreihe durch einen axialen Spalt 48 beabstandet, der eine ringförmige Öffnung bildet.

Durch den Spalt 48 ist der so genannte Radseitenraum 49 des Schaufelrads 35 der letzten Turbinenstufe mit dem Heißgaskanal 16 der Abgasstrecke 12 verbunden. Hier herrscht im Normalbetrieb der Gasturbine 1 typischerweise ein Unterdruck, d. h. ein Druck, der geringer ist, als der Druck der Umgebungsluft im Außenbereich der Gasturbine 1. Dies wird dazu genutzt, um Umgebungsluft von außen anzusaugen und damit den Radseitenraum 49 zu kühlen.

Hierfür ist im zum Heißgaskanal 16 rückseitigen Bereich der Innenverkleidung 42 der Abgasstrecke 12 ein Luftkanal 50 gebildet. Dieser umfasst den Hohlraum, der zwischen Innenverkleidung 42 und statorseitigem Teil der Sperrluftdichtung 36 gebildet wird. Die kreisscheibenförmige Trennwand 52, die diesen Hohlraum gegen den Radseitenraum 49 der letzten Laufschaufelreihe abtrennt, ist von einer Vielzahl axialer Bohrungen 54 durchsetzt, die sich entlang des gesamten Umfangs der Gasturbine 1 erstrecken. Eintrittsseitig (nicht dargestellt) ist der Luftkanal 50 mit der Umgebung der Gasturbine 1 verbunden. Austrittsseitig mündet er durch die Bohrungen 54 in den Radseitenraum 49. Der Radseitenraum 49 kann zudem durch weitere Öffnungen 51 mit Spülluft versorgt werden, die aus Verdichterentnahmen oder Gebläsen zur Verfügung gestellt wird.

Im Normalbetrieb der Gasturbine 1 sorgt der Unterdruck des Abgases nach der letzten Laufschaufelreihe dafür, dass durch den Luftkanal 50 Luft aus der Umgebung angesaugt wird. Bei bestimmten Betriebsweisen, insbesondere tiefer Teillast kann es jedoch dazu kommen, dass hier gegenüber der Umgebung ein Überdruck herrscht. Dieser Überdruck herrscht aufgrund der Verbindung durch den Spalt 48 auch im Radseitenraum 49. In der in FIG 2 dargestellten Gasturbine 1 kann es somit zu einer Strömungsumkehr im Luftkanal 50 kommen, so dass schädliches Abgas durch den Luftkanal 50 in die Umgebung eintritt.

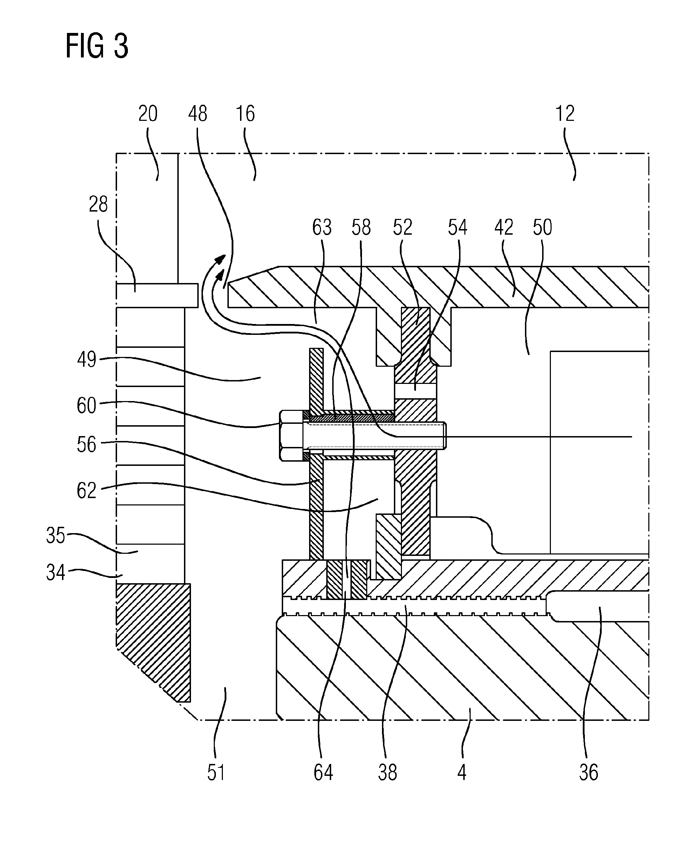

Dies wird durch eine Modifikation der Verbindung zwischen Luftkanal 50 und Radseitenraum 49 (angezeigt durch Kreis III) verhindert. Diese Modifikation ist vergrößert in FIG 3 dargestellt.

FIG 3 zeigt zunächst die aus FIG 2 bekannten Bauteile im genannten Bereich, wie die Welle 4, den der letzten Laufschaufelreihe zugewandten Teil der Sperrluftdichtung 36, die Innenverkleidung 42 und die Trennwand 52 mit den axialen Bohrungen 54. Parallel zur Trennwand 52 ist jedoch auf deren der letzten Leitschaufelreihe zugewandten Seite eine weitere Trennwand 56 angeordnet. Diese weist zylindermantelförmige Abstandshalter 58 auf, die sich zur ersten Trennwand 52 erstrecken. Durch die Abstandshalter 58 hindurch ist die zweite Trennwand 56 an der ersten Trennwand 52 mittels Schrauben 60 befestigt.

Die Trennwände 52, 56, Innenverkleidung 42 und der statorseitige Teil der Sperrluftdichtung 36 bilden somit eine Kammer 62, die zwischen der Bohrung 54 zum Luftkanal 50 und Radseitenraum 49 angeordnet ist. Diese erstreckt sich umlaufend um die gesamte Achse der Gasturbine 1. Die Trennwand 56 hat einen leicht geringeren Außenradius als die Trennwand 52, so dass zwischen Trennwand 56 und Innenverkleidung 42 ein radialer Spalt 63 gebildet ist, der nunmehr die Kammer 62 mit dem Radseitenraum 49 verbindet. Die aus dem Außenraum angesaugte Luft tritt somit nunmehr zunächst durch die Bohrungen 54 in der Trennwand 52 in die Kammer 62 ein und von dort durch den Spalt 63 in den Radseitenraum 49 (und im Folgenden auch durch den Spalt 48 in den Heißgaskanal 16.

Zusätzlich weist die Kammer 62 Öffnungen 64 auf, die sich entlang des Umfangs der Gasturbine 1 verteilt in radialer Richtung als Bohrungen durch den statorseitigen Teil der Sperrluftdichtung 36 erstrecken. Damit wird die Kammer 62 mit dem mit Sperrluft beaufschlagten Zwischenraum des Dichtlabyrinths 38 verbunden. Da hier Luft von vergleichsweise hohem Druck, d. h. im Bereich von einigen bar anliegt, stellt sich somit je nach Größe und Anzahl der Öffnungen 64 ein kontinuierlicher Massenstrom von Sperrluft in die Kammer 62 ein. Durch den vergleichsweise hohen Druck in der Sperrluftdichtung 36 im Vergleich zu den zu erwartenden Abgasdrücken ist dieser Massenstrom von den Druckverhältnissen im Heißgaskanal 16 der Abgasstrecke 12 weitgehend unabhängig. In einer alternativen Ausführungsform kann die Öffnung 64 nicht in der Sperrluftdichtung 36 münden, sondern vielmehr an eine anderweitige Druckluftversorgung anschließen, die ebenfalls die Sperrluftdichtung 36 mit Druckluft versorgt. Hierdurch ergibt sich eine parallele Versorgung von Kammer 62 und Sperrluftdichtung 36 mit Druckluft.

Weitere Voraussetzung hierfür ist, dass die Kammer 62 nicht aufgeladen wird. Dies ist insbesondere dadurch erreicht, dass der Spalt 63 zwischen Trennwand 56 und Innenverkleidung 42 ausreichend groß dimensioniert ist, so dass der durch die Öffnungen 64 zugeführte Luftmassenstrom stets direkt in den Radseitenraum 49 entweichen kann und die Kammer 62 nur auf einem geringfügig höheren Druckniveau des Abgases bleibt, d. h. lediglich einige mbar oberhalb des Abgasdrucks. Entscheidend ist, dass die Kammer 62 vollständig mit Kühlluft gespült wird.

In alternativen, nicht gezeigten Ausführungsformen kann der Luftmassenstrom in die Kammer 62 auch aus anderen Quellen stammen. Beispielsweise kann ein separates Gebläse vorgesehen sein oder es kann eine separate Verdichterentnahmeeinrichtung vorgesehen sein, aus der der Luftmassenstrom zur Verfügung gestellt wird.

Durch die Bildung der Kammer 62 zwischen Luftkanal 50 und Radseitenraum 49 wird die im Volllast- oder hohen Teillastbetrieb vorgesehene Ansaugung von Luft aus dem Außenraum nicht behindert. Da das Druckniveau der Kammer 62 nur knapp oberhalb des Abgasdruckes liegt, erfolgt noch immer eine Ansaugung von Außenluft bei einem Unterdruck des Abgases. Die angesaugte Außenluft vermischt sich in der Kammer 62 mit dem Luftmassenstrom aus der Sperrluftdichtung 36 und tritt durch den Spalt 63 in den Radseitenraum 49 und von dort durch den axialen Spalt 48 in den Heißgaskanal 16 der Abgasstrecke 12 ein.

Im tiefen Teillastbetrieb oder in anderen Betriebszuständen, in denen sich die Druckverhältnisse umkehren, d. h. der Abgasdruck oberhalb des Umgebungsdrucks liegt, wird sich die Strömung durch den Luftkanal 50 umkehren. Da am heißgaskanalseitigen Austritt des Luftkanals 50 aber nunmehr die Kammer 62 angeordnet ist, die durch den kontinuierlichen Massenstrom aus den Öffnungen 64 mit Luft gespült ist, wird die Rückströmung nun ausschließlich aus dem durch die Öffnungen 64 zugeführten Luftmassenstrom gespeist. Dadurch wird ein Austritt von schädlichem Abgas in die Umgebung durch den Luftkanal 50 verhindert.

## Patentansprüche

1. Gasturbine (1) mit einem Stator, der eine Abgasstrecke (12) umfasst, deren Innenverkleidung (42) von den Plattformen (28) der Laufschaufeln (20) des Schaufelrads (35) der heißgasseitig letzten Turbinenstufe des Rotors der Gasturbine (1) durch einen axialen Spalt (48) beabstandet ist, wobei der Spalt (48) die Abgasstrecke (12) mit einem Radseitenraum (49) des Schaufelrads (35) verbindet, der in einem Betriebszustand der Gasturbine (1) einen geringeren Druck als den Luftdruck der Außenumgebung der Gasturbine (1) aufweist, und der einen Lufteintritt (63) aufweist, der über einen Luftkanal (50) mit der Außenumgebung der Gasturbine (1) verbunden ist, **dadurch gekennzeichnet, dass** der Lufteintritt (63) mit dem Luftkanal (50) über eine Kammer (62) verbunden ist, die eine Öffnung (64) aufweist, durch die die Kammer (62) mit einem vorgegebenen Gasmassenstrom beaufschlagt wird.

2. Gasturbine (1) nach Anspruch 1, bei der die Kammer (62) an den Radseitenraum (49) angrenzt.

3. Gasturbine (1) nach einem der vorhergehenden Ansprüche, bei der die Kammer (62) derart ausgeführt ist, dass der Druck in der Kammer (62) weniger als 30 mbar, vorzugsweise weniger als 10 mbar oberhalb des Druckes im Radseitenraum (49) liegt.

4. Gasturbine (1) nach einem der vorhergehenden Ansprüche, bei der der Radseitenraum eine weitere Öffnung (51) aufweist, durch die Spülluft zugeführt wird.

5. Gasturbine (1) nach einem der vorhergehenden Ansprüche, bei der die Quelle des Gasmassenstroms für einen im Wesentlichen konstanten Massenstrom bei sich änderndem Druck im Radseitenraum (49) ausgelegt ist.

6. Gasturbine (1) nach einem der vorhergehenden Ansprüche, bei der der Öffnung (64) der Kammer (62) ein Gebläse vorgeschaltet ist.

7. Gasturbine (1) nach einem der vorhergehenden Ansprüche, bei der der Öffnung (64) der Kammer (62) eine Verdichterentnahmeeinrichtung vorgeschaltet ist.

8. Gasturbine (1) nach einem der vorhergehenden Ansprüche, bei der der Öffnung (64) der Kammer (62) eine Sperrluftdichtung (36) der Welle (4) der Gasturbine (1) zugeordnet ist.

9. Gasturbine (1) nach einem der vorhergehenden Ansprüche, bei der die Kammer (62) um die Achse der Gasturbine (1) umlaufend ausgebildet ist.

10. Kraftwerksanlage (2) mit einer Gasturbine (1) nach einem der vorhergehenden Ansprüche.
